# EUROPEAN PATENT APPLICATION

(11) **EP 3 878 642 A1**
(43) Date of publication of application: **15.09.2021**
(21) Application number: 21162441.6
(22) Date of filing: 12.03.2021
(51) Int. Cl.: B32B 3/26, B32B 7/027, B32B 7/12, B32B 9/00, B32B 9/04, B32B 21/00, B32B 21/02, B32B 21/04, B32B 21/14

(54) **THERMAL-LAYERED VENEER PRODUCT FOR AIRCRAFT INTERIOR COMPONENTS**

(30) Priority: 13.03.2020 US 202016818761
(71) Applicant: Goodrich Corporation, Charlotte, NC 28217-4578 (US)
(72) Inventor: CHAPMAN, Christopher L., Georgetown, IN Indiana 47122 (US)
(74) Representative: Dehns

(57) **Abstract**

A thermal-layered veneer product (100) for aircraft interior components may include at least one substrate layer (102). The thermal-layered veneer product (100) may include at least one thermally-conductive layer (104) disposed on the at least one substrate layer (102). The at least one thermally-conductive layer (104) may include at least one perforated graphite layer. The thermal-layered veneer product may include at least one non-fire-retardant coated veneer layer disposed on the at least one thermally-conductive layer (104). The at least one veneer layer may be non-fire-retardant coated. One or more of the at least one substrate layer (102), the at least one thermally-conductive layer (104), or the at least one veneer layer may be compliant with a FAR 25.853 burn test.

## Description

### BACKGROUND

Aircraft interior components such as decorative panels are subject to specific aviation guidelines and/or standards. The installation of the aircraft interior components may be limited to select aircraft, depending on whether the aviation guidelines and/or standards will be met by the design parameters of the aircraft interior components.

### SUMMARY

A thermal-layered veneer product for aircraft interior components is disclosed, in accordance with one or more embodiments of the disclosure. The veneer product may include at least one substrate layer. The veneer product may include at least one thermally-conductive layer disposed on the at least one substrate layer. The at least one thermally-conductive layer may include at least one perforated graphite layer. The veneer product may include at least one non-fire-retardant coated veneer layer disposed on the at least one thermally-conductive layer. The at least one veneer layer may not include a non-fire-retardant coating. One or more of the at least one substrate layer, the at least one thermally-conductive layer, or the at least one veneer layer may be compliant with a FAR 25.853 burn test.

In some embodiments, each of the at least one substrate layer, the at least one thermally-conductive layer, and the at least one veneer layer being compliant with the FAR 25.853 burn test.

In some embodiments, the at least one substrate layer may be two-ply and fabricated from a solid material.

In some embodiments, the at least one substrate layer may be fabricated from natural lumber.

In some embodiments, the at least one substrate layer may include at least one of a fire-retardant material or a fire-retardant coating.

In some embodiments, the at least one perforated graphite layer may include at least one of a non-expandable graphite or a non-intumescent graphite.

In some embodiments, the veneer product may include at least one adhesive layer positioned between the at least one substrate layer and the at least one thermally-conductive layer.

In some embodiments, the at least one adhesive layer positioned between the at least one substrate layer and the at least one thermally-conductive layer and the at least one veneer layer may be fire-retardant.

In some embodiments, the at least one adhesive layer positioned between the at least one substrate layer and the at least one thermally-conductive layer and the at least one veneer layer may be configured to penetrate the at least one perforated graphite layer.

In some embodiments, the at least one veneer layer may be cut from natural lumber.

In some embodiments, the at least one veneer layer may be a composite veneer layer fabricated from a mixture including raw wood product and a binder.

In some embodiments, the veneer product may include at least one adhesive layer positioned between the at least one thermally-conductive layer and the at least one veneer layer.

In some embodiments, the at least one adhesive layer positioned between the at least one thermally-conductive layer and the at least one veneer layer may be fire-retardant.

In some embodiments, the at least one adhesive layer positioned between the at least one thermally-conductive layer and the at least one veneer layer may be configured to penetrate the at least one perforated graphite layer.

An aircraft is disclosed, in accordance with one or more embodiments of the disclosure. The aircraft may include at least one aircraft interior component. The at least one aircraft interior component may include a thermal-layered veneer product. The thermal-layered veneer product may include at least one substrate layer. The thermal-layered veneer product may include at least one thermally-conductive layer disposed on the at least one substrate layer. The at least one thermally-conductive layer may include at least one perforated graphite layer. The thermal-layered veneer product may include at least one veneer layer disposed on the at least one thermally-conductive layer. The at least one veneer layer may not include a non-fire-retardant coating. One or more of the at least one substrate layer, the at least one thermally-conductive layer, or the at least one veneer layer may be compliant with a FAR 25.853 burn test.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are examples and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A illustrates a side view of a thermal-layered veneer product for aircraft interior components, in accordance with one or more embodiments of the disclosure;
FIG. 1B illustrates a side view of a thermal-layered veneer product for aircraft interior components, in accordance with one or more embodiments of the disclosure;
FIG. 1C illustrates an exploded perspective view of a thermal-layered veneer product for aircraft interior components, in accordance with one or more embodiments of the disclosure;
FIG. 1D illustrates a perspective view of a thermal-layered veneer product for aircraft interior components, in accordance with one or more embodiments of the disclosure;
FIG. 2 illustrates a thermally-conductive layer of a thermal-layered veneer product for aircraft interior components, in accordance with one or more embodiments of the disclosure;
FIG. 3A illustrates a table including test data of non-thermal-layered veneer products for aircraft interior components, in accordance with one or more embodiments of the disclosure;
FIG. 3B illustrates a table including test data of thermal-layered veneer products for aircraft interior components, in accordance with one or more embodiments of the disclosure; and
FIG. 4 illustrates an interior of an aircraft, in accordance with one or more embodiments of the disclosure.

### DETAILED DESCRIPTION OF THE INVENTION

Reference will now be made in detail to the subject matter disclosed, which is illustrated in the accompanying drawings.

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

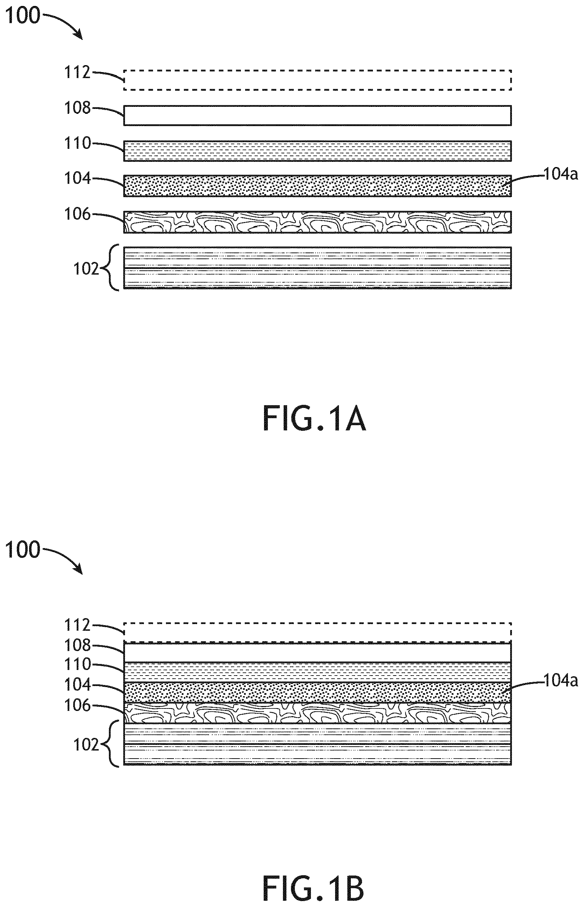

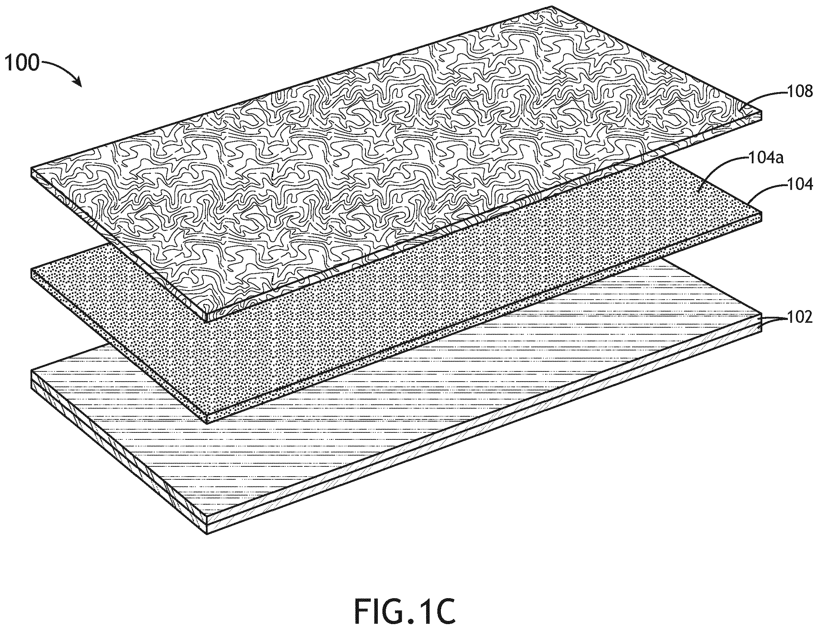

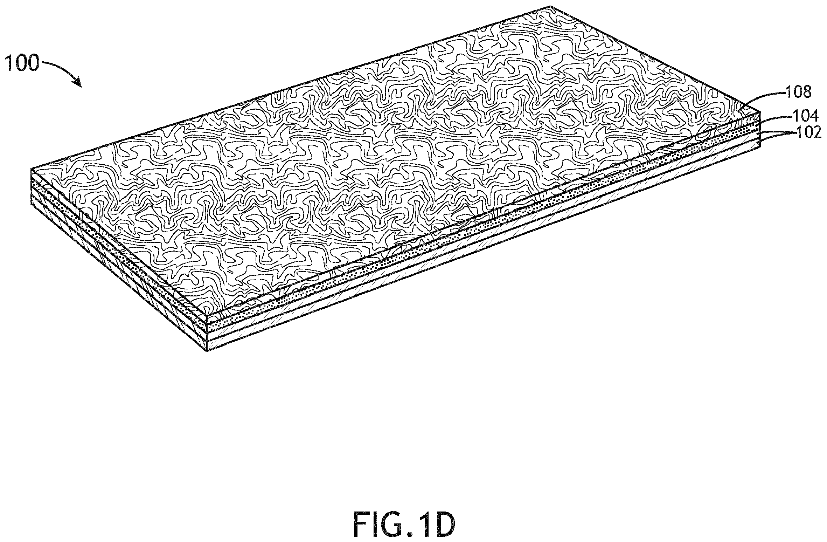

FIGS. 1A-4 in general illustrate a thermal-layered veneer product for aircraft interior components, in accordance with one or more embodiments of the disclosure.

Aircraft interior components such as decorative panels are subject to specific aviation guidelines and/or standards. The aviation guidelines and/or standards may be put forth by the Federal Aviation Administration (FAA) (e.g., and codified in the Code of Federal Regulations (CFR)), the European Aviation Safety Agency (EASA) or any other flight certification agency or organization; the American National Standards Institute (ANSI), Aeronautical Radio, Incorporated (ARINC), or any other standards setting organization or company; the Radio Technical Commission for Aeronautics (RTCA) or any other guidelines agency or organization; or the like.

For example, 14 C.F.R. Part 25, *AIRWORTHINESS STANDARDS: TRANSPORT CATEGORY AIRPLANES,* includes 14 C.F.R. § 25.853, *Compartment Interiors,* 14 C.F.R. § 25.855, *Cargo or baggage compartments,* and corresponding Appendix F includes guidelines for flame requirements that a material cannot exceed to be installed within an aircraft. For instance, one test is the FAR 25.853 burn test for cabin and compartment materials, where a flame may be applied to cabin and compartment materials in either a 12-second interval or a 60-second interval.

The installation of the aircraft interior components may be limited to select aircraft, depending on whether the aviation guidelines and/or standards will be met by the design parameters of the aircraft interior components.

For example, to meet or exceed the FAR 25.853 burn test when a flame is applied for a 12-second internal, the material must be self-extinguishing when tested vertically; the flame time after removal of the flame cannot exceed 15 seconds; the average burn length for the material may not exceed 8 inches; and drippings from the material cannot continue to flame for more than an average 5 seconds after falling.

By way of another example, to meet or exceed the FAR 25.853 burn test when a flame is applied for a 60-second internal, the material must be self-extinguishing when tested vertically; the flame time after removal of the flame cannot exceed 15 seconds; the average burn length for the material may not exceed 6 inches; and drippings from the material cannot continue to flame for more than an average 3 seconds after falling.

In general, wood veneer products (e.g., veneer decorative panels; veneer tables or work surfaces; veneer panels for suite dividers, bulkheads, or galleys; or the like) require some form of fire resistant and/or fire-retardant material to pass the FAR 25.853 burn test. The fire resistant and/or fire-retardant material, however, may discolor the wood veneer product, leading to an undesirable finish.

As such, it would be desirable to provide a thermal-layered veneer product for aircraft interior components capable of meeting or exceeding the FAR 25.853 burn test without discoloration of the veneer product.

FIGS. 1A-2 illustrate a thermal-layered veneer product 100 for aircraft interior components, in accordance with one or more embodiments of the disclosure. It is noted herein that the term "thermal-layered veneer product 100" and variants of the term "thermal-layered veneer product 100" (e.g., "veneer product 100", or the like) may be considered equivalent for purposes of the disclosure.

The veneer product 100 may include one or more layers. It is noted herein the veneer product 100 may be defined in terms of "-ply" when referring to the number of layers. For example, a veneer product 100 with four layers may be considered a four-ply veneer product 100. Therefore, the description should not be interpreted as a limitation on the scope of the disclosure but merely an illustration.

The veneer product 100 may include one or more substrate layers 102. For example, the veneer product 100 may include two substrate layers 102, or a two-ply substrate layer 102. Where there are multiple substrate layers 102, the multiple substrate layers 102 may be coupled together via one or more adhesive layers, fasteners (e.g., inset or countersunk fasteners), or the like. For example, the one or more adhesive layers may include a fire-resistant and/or fire-retardant adhesive film.

The one or more substrate layers 102 may be fabricated from a wood, resin, plastic, metal, or other material. For example, the wood may include, but is not limited to, natural lumber. For instance, the wood may include, but is not limited to, poplar. By way of another example, the resin may include, but is not limited to, a phenol formaldehyde (or phenolic) resin (e.g., a thermosetting resin or plastic made by condensation of a phenol with an aldehyde).

The one or more substrate layers 102 may be fabricated from a solid material or a nearly-solid material. For example, the one or more substrate layers 102 may be a board cut from raw product (e.g., raw wood product) or a fabricated composite board, where the raw product or fabricated composite board includes natural cavities and/or non-material artificially-generated cavities. The one or more substrate layers 102 may include a honeycomb structure or a lattice structure. For example, the honeycomb structure may be vertically-oriented (e.g., oriented parallel or substantially parallel to an axis of the direction of build of the veneer product 100). By way of another example, the honeycomb structure may be horizontally-oriented (e.g., oriented perpendicular or substantially perpendicular to the axis of the direction of build of the veneer product 100). By way of another example, the honeycomb structure may be set at an angle relative to the axis of the direction of build of the veneer product 100.

The one or more substrate layers 102 may be capable of meeting or exceeding (e.g., be compliant with) the FAR 25.853 burn test. For example, the one or more substrate layers 102 may be fabricated at least in part from a selected fire-resistant and/or fire-retardant material or chemical. By way of another example, the one or more substrate layers 102 may be coated with a selected fire-resistant and/or fire-retardant material or chemical.

It is noted herein the one or more substrate layers 102 may be fabricated from some combination of the above examples. Therefore, the description should not be interpreted as a limitation on the scope of the disclosure but merely an illustration.

The veneer product 100 may include one or more thermally-conductive layers 104, or thermal layers 104 (e.g., such that the veneer product 100 is thermal-layered). The one or more thermally-conductive layers 104 may be positioned or disposed on the one or more substrate layers 102 along the axis of the direction of build in the veneer product 100.

The one or more thermally-conductive layers 104 may be fabricated from a metal, a metalloid, and/or a non-metal. For example, the one or more thermally-conductive layers 104 may include, but are not limited to, an elemental metal, metalloid, or non-metal layer; a metal compound, a metalloid compound, or non-metal compound layer; or the like. For instance, the one or more thermally-conductive layers 104 may include one or more graphite layers. In addition, the one or more thermally-conductive layers 104 may include an aluminum layer, a copper layer, or other metal, metalloid, or non-metal element or compound layer. In general, it is noted herein the one or more thermally-conductive layers 104 may include one or more graphite layers either as standalone thermally-conductive layers 104 or along with one or more secondary thermally-conductive layers 104 (e.g., an aluminum layer, or another layer as described above).

The one or more thermally-conductive layers 104 may include multiple layers. For example, the one or more thermally-conductive layers 104 may include a first sublayer or central element or compound layer of a first metal, metalloid, or non-metal and at least a second sublayer or plating element or compound layer of at least a second metal, metalloid, or non-metal.

The one or more thermally-conductive layers 104 may be capable of meeting or exceeding (e.g., be compliant with) the FAR 25.853 burn test.

In one example, the one or more thermally-conductive layers 104 may include one or more graphite layers. The one or more graphite layers may be thermally-conductive enough that the one or more graphite layers may not include and/or may not be coated with a selected fire-resistant and/or fire-retardant material or chemical, and the one or more graphite layers will themselves thermally conduct the heat and put out a flame in a burn test (e.g., the FAR 25.853 burn test).

The one or more graphite layers may be a select thickness. For example, the thickness may fall within a range between 0.0001 inches and 0.01 inches. It is noted herein, however, the thickness of the one or more graphite layers are not limited to the example thicknesses disclosed. Therefore, the above description should not be interpreted as a limitation on the scope of the disclosure but merely an illustration.

The one or more graphite layers may include one or more perforations 104a. In general, the one or more graphite layers may include any number of perforations 104a. The one or more perforations 104a may be one or more shapes. For example, the one or more perforations 104a may be, but are not limited to being, circular in shape. In addition, the one or more perforations 104a may be one or more sizes (e.g., have one or more different dimensions including, but not limited to, length, width, radius, or the like). For example, the one or more perforations 104a may have a diameter ranging between 0.039 inches (1 millimeter) and 0.118 inches (3 millimeters). Further, the one or more perforations 104a may be in applied in one or more patterns to the one or more graphite layers. For example, the one or more perforations 104a may be having a pitch ranging between 0.079 inches (2 millimeters) and 0.276 inches (7 millimeters). It is noted herein, however, the one or more perforations 104a may be count-restricted, shape-restricted, and/or dimension-restricted to prevent a loss of thermal conductivity.

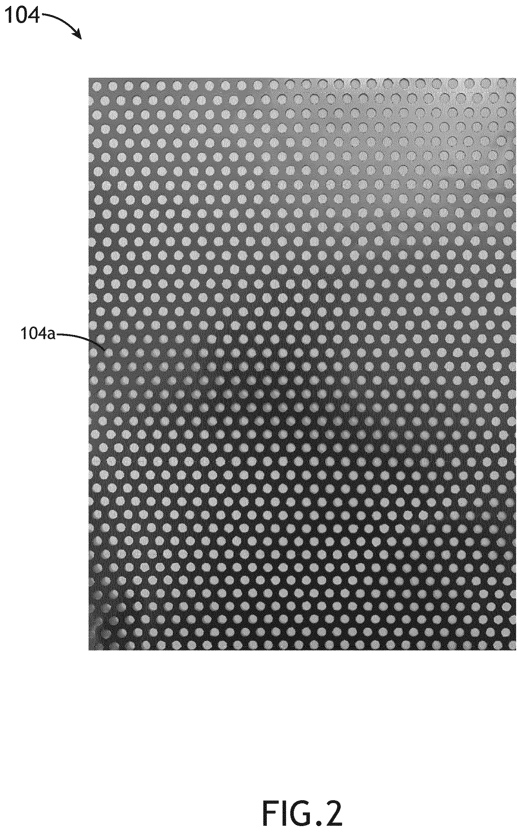

FIG. 2 illustrates an example size and shape of perforations 104a in an example pattern within a thermally-conductive layer 104, where the thermally-conductive layer 104 is fabricated from graphite. It is noted herein, however, the thermally-conductive layer 104 fabricated from graphite is not limited to the example the count, shape, and/or size of perforations 104a disclosed. Therefore, the above description should not be interpreted as a limitation on the scope of the disclosure but merely an illustration.

In this regard, the one or more perforations 104a may be necessary to prevent the one or more graphite layers from being too soft, which may result in de-lamination. The one or more perforations 104a in the one or more graphite layers may add stability and allow for greater adherence to other layers of the veneer product 100 (e.g., due to the soaking through of and bonding to both sides of the thermally-conductive layers by adhesives, as described in detail throughout the disclosure).

It is noted herein the one or more graphite layers may not include expandable graphite and/or intumescent graphite, but instead may include one or more non-expandable and/or non-intumescent graphite layers. Therefore, the description should not be interpreted as a limitation on the scope of the disclosure but merely an illustration.

By way of another example, the one or more thermally-conductive layers 104 may include one or more aluminum layers. It is noted herein, however, that using one or more aluminum layers may require the one or more substrate layers and/or one or more face layers (e.g., one or more veneer layers 108) to include and/or be coated with a selected fire-resistant and/or fire-retardant material or chemical, which may cause discoloration within the one or more veneer layers 108. In addition, it is noted herein the one or more graphite layers may be much more thermally-conductive than the one or more aluminum layers. Further, the one or more aluminum layers may need to be of a thickness undesirable to the build of the veneer product 100. In this regard, it may be preferable for the one or more thermally-conductive layers 104 of the disclosure to include one or more graphite layers, either as standalone thermally-conductive layers 104 or along with one or more secondary thermally-conductive layers 104 (e.g., the one or more aluminum layers, or another layer as described above).

Although embodiments of the disclosure illustrate the one or more thermally-conductive layers 104 as not including and/or not being coated with a selected fire-resistant and/or fire-retardant material or chemical, it is noted herein the one or more thermally-conductive layers 104 may include and/or may be coated with a selected fire-resistant and/or fire-retardant material or chemical is assist in meeting or exceeding (e.g., be compliant with) the FAR 25.853 burn test. Therefore, the above description should not be interpreted as a limitation on the scope of the disclosure but merely an illustration.

The veneer product 100 may include one or more adhesive layers 106. For example, the one or more adhesive layers 110 may include a fire-resistant and/or fire-retardant adhesive film. The one or more adhesive layers 106 may be positioned between the one or more substrate layers 102 and the one or more thermally-conductive layers 104.

The one or more adhesive layers 106 may be capable of meeting or exceeding (e.g., be compliant with) the FAR 25.853 burn test. For example, the one or more adhesive layers 106 may include or be coated with a selected fire-retardant material or chemical.

The veneer product 100 may include one or more veneer layers 108. The one or more veneer layers 108 may include a particular wood color, design, grain width, and/or grain pattern. The one or more veneer layers 108 may be positioned or disposed on the one or more thermally-conductive layers 104 along the axis of the direction of build in the veneer product 100. At least some of the one or more veneer layers 108 may be cut from natural lumber. At least some of the one or more veneer layers 108 may be a composite veneer layer fabricated from a mixture.

The mixture may include wood product from one or more sources of raw wood material. For example, the raw wood material may include, but is not limited to, sawdust, wood shavings, wood pulp, or other wood product. By way of another example, the raw wood material may be generated from one or more different species of trees.

The mixture may include a binder (or binding agent). For example, the binder may include, but is not limited to, a thermoplastic, an adhesive, and/or water. For instance, the adhesive may include, but is not limited to, an epoxy resin, a wood glue, or other adhesive suitable for use with wood. The epoxy resin may include a clear epoxy resin that is not visible in the stack of lumber once dry. It is noted herein the use of an epoxy resin may allow for the color of the sheets of veneer to be replicated throughout the stack of lumber, without concern of unwanted color (e.g., a white or yellow layer). In addition, it is noted herein the epoxy resin may be a two-part epoxy resin. The adhesive may be in a powder, particle, and/or particulate form to mix with the wood product.

Where the one or more veneer layers 108 are fabricated from a mixture, the one or more veneer layers 108 may include a material selected to generate the particular wood color, design, grain width, and/or grain pattern. For example, the material may include the raw wood product. By way of another example, the material may include a dyed water-based material. By way of another example, the material may include a thermal-sensitive material. For instance, the thermal-sensitive material may be configured to activate (e.g., in the presence of heat) and generate the particular color, design, grain width, and/or grain pattern. The dyed water-based material and/or thermal-sensitive material may be in a powder, particle, and/or particulate form to mix with the wood product.

The one or more veneer layers 108 may be capable of meeting or exceeding (e.g., be compliant with) the FAR 25.853 burn test. Where the one or more veneer layers 108 are fabricated from a mixture, the one or more veneer layers 108 may include a fire-resistant and/or fire-retardant material. For example, the fire-resistant and/or fire-retardant material may include, but is not limited to, metal powder, metal particles, metal shavings, or other metal product. By way of another example, the fire-resistant and/or fire-retardant material may include, but is not limited to, a concrete, a silicate (e.g., a material with a chemical compound including SiO₂ structures), or another material with one or more fire-resistant and/or fire-retardant properties.

It is noted herein, however, that the one or more veneer layers 108 may not include and/or may not be coated with a selected fire-resistant and/or fire-retardant material or chemical. Including or applying the coated with the selected fire-resistant and/or fire-retardant material or chemical may cause discoloration within the one or more veneer layers 108. For example, the selected fire-resistant and/or fire-retardant material or chemical may cause discoloration within the one or more veneer layers 108 when one or more protective layers or coatings (e.g., one or more coatings 112) are applied to the one or more veneer layers 108. In this regard, the one or more veneer layers 108 may be considered non-treated, for purposes of the disclosure.

The veneer product 100 may include one or more adhesive layers 110. For example, the one or more adhesive layers 110 may include a fire-resistant and/or fire-retardant adhesive film. The one or more adhesive layers 110 may be positioned between the one or more thermally-conductive layers 104 and the one or more veneer layers 108.

Adhering the one or more thermally-conductive layers 104 to the one or more veneer layers 108 may allow for the use of one or more veneer layers 108 that do not include and/or may not be coated with a selected fire-resistant and/or fire-retardant material or chemical. In this regard, the one or more veneer layers 108 may be capable of meeting or exceeding (e.g., be compliant with) the FAR 25.853 burn test without the use of fire-resistant and/or fire-retardant materials or chemicals.

The one or more adhesive layers 110 may be capable of meeting or exceeding (e.g., be compliant with) the FAR 25.853 burn test. For example, the one or more adhesive layers 110 may include or be coated with a selected fire-retardant material or chemical.

Where the one or more thermally-conductive layers 104 include one or more graphite layers with one or more perforations 104a, it is noted herein the one or more perforations 104a may allow for the one or more adhesive layers 106 and/or the one or more adhesive layers 110 to at least partially penetrate the one or more thermally-conductive layers 104. The penetrating the one or more thermally-conductive layers 104 by the one or more adhesive layers 106 and/or the one or more adhesive layers 110 may allow for greater adherence of the one or more thermally-conductive layers 104 to the one or more substrate layers 102 and/or the one or more veneer layers 108.

The veneer product 100 may include one or more coatings 112. The one or more coatings 112 may be applied to (or disposed on) the one or more veneer layers 108. The one or more coatings 112 may be transparent or translucent, allowing the particular wood color, design, grain width, and/or grain pattern of the one or more veneer layers 108 to be visible through the one or more coatings 112. It is noted herein, however, that the one or more coatings 112 may be opaque and configured to generate the particular wood color, design, grain width, and/or grain pattern. Therefore, the description should not be interpreted as a limitation on the scope of the disclosure but merely an illustration.

The one or more adhesive layers 106 may be capable of meeting or exceeding (e.g., be compliant with) the FAR 25.853 burn test. For example, the one or more adhesive layers 110 may include or be coated with a selected fire-retardant material or chemical. It is noted herein, however, that a select type and/or a select quantity of the fire-resistant and/or fire-retardant adhesive material or chemical within the one or more coatings 112 may be cause an adverse reaction in the veneer product 100, potentially causing the veneer product 100 to not pass the FAR 25.853 burn test.

Although embodiments of the present disclosure illustrate the veneer product 100 as including the one or more layers 102, 104, 106, 108, 110 and the one or more coatings 112, it is noted herein the veneer product 100 is not limited to the layers as illustrated in FIGS. 1A-1D. For example, the veneer product 100 may include more or fewer layers and/or coatings than those illustrated in FIGS. 1A-1D. By way of another example, the veneer product 100 may include the layers and/or coatings of the veneer product 100 in a different order than those illustrated in FIGS. 1A-1D. By way of another example, at least one of the layers and/or coatings of the veneer product 100 may be of a same thickness or of a different thickness than the other layers and/or coatings of the veneer product 100 as illustrated in FIGS. 1A-1D. Therefore, the above description should not be interpreted as a limitation on the present disclosure but merely an illustration.

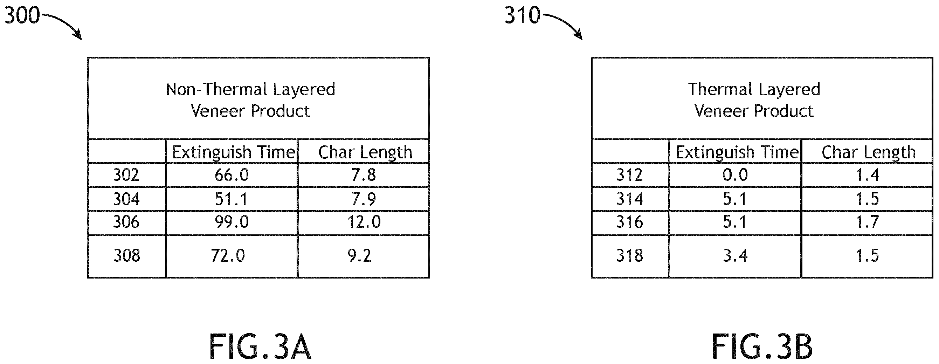

FIG. 3A illustrates tests of non-thermal-layered veneer products for aircraft interior components, in accordance with one or more embodiments of the disclosure.

In a data table 300 as illustrated in FIG. 3A, test runs 302, 304, 306 for a non-thermal-layered veneer product were performed, for which an average 308 was determined. For example, the non-thermal-layered veneer product may have one or more differences from the thermal-layered veneer product 100, where the differences may include, but are not limited to, not including one or more thermal-conductive layers 104 fabricated from graphite and including one or more perforations 104a.

As illustrated in the data table 300, the non-thermal-layered veneer product is not capable of meeting or exceeding the FAR 25.853 burn test, as previously described herein. For example, the non-thermal-layered veneer product had an average burn or char length of 9.2 inches and an average extinguish time of 72.0 seconds, which fails requirements of the FAR 25.853 burn test.

FIG. 3B illustrates tests of thermal-layered veneer products in aircraft interior components, in accordance with one or more embodiments of the disclosure.

In a data table 310 as illustrated in FIG. 3B, test runs 312, 314, 316 for the thermal-layered veneer product 100 were performed, for which an average 308 was determined. For example, the thermal-layered veneer product 100 may have a build as described throughout the disclosure.

As illustrated in the data table 310, the thermal-layered veneer product 100 is capable of meeting or exceeding the FAR 25.853 burn test, as previously described herein. For example, the thermal-layered veneer product 100 had an average burn or char length of 1.5 inches and an average extinguish time of 3.4 seconds, which exceeds requirements of the FAR 25.853 burn test.

In comparing the two sets of tests as illustrated in FIGS. 3A and 3B, then, it may be seen the build of the thermal-layered veneer product 100 as described through the disclosure is capable of meeting the FAR 25.853 burn test, as compared to more non-thermal-conductive veneer products. It is noted herein the meeting or exceeding the FAR. 25.853 burn test may be accomplished by the thermal-layered veneer product 100 without chemicals in the one or more veneer layers 108, due to the one or more thermally-conductive layers 104 (e.g., including perforated graphite).

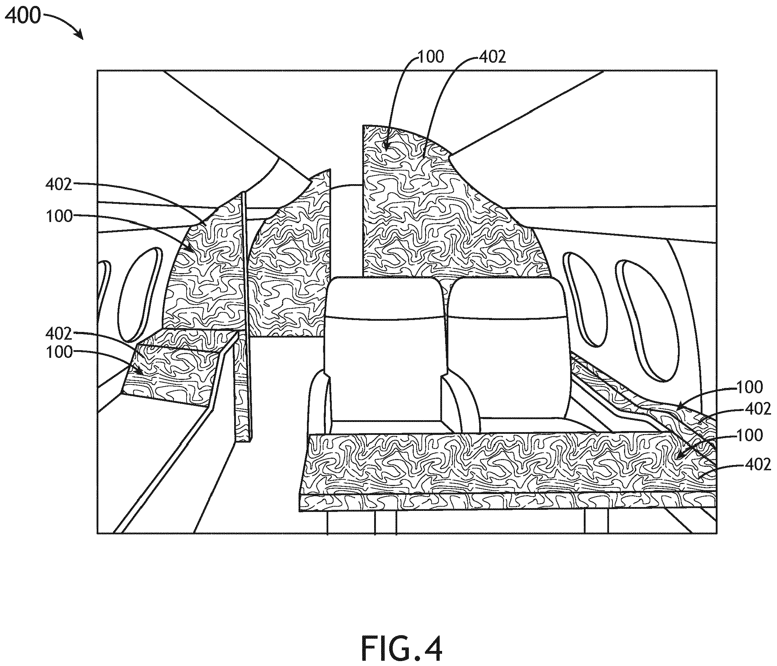

FIG. 4 illustrates an interior of an aircraft 200, in accordance with one or more embodiments of the disclosure.

The aircraft 400 may include one or more aircraft interior components 402. For example, the one or more aircraft interior components 402 may include, but are not limited to, veneer decorative panels; veneer tables or work surfaces; veneer panels for suite dividers, bulkheads, or galleys; or the like. At least some of the one or more aircraft interior components 402 may be covered at least in part with the veneer product 100.

In this regard, the disclosure is directed to a thermal-layered veneer product for aircraft interior components capable of meeting or exceeding the FAR 25.853 burn test without discoloration of the veneer product.

Although embodiments of the disclosure are directed to using the veneer product 100 in an aircraft, it is noted herein the veneer product 100 is not limited to aircraft. For example, the veneer product 100 may be used in any vehicle. For instance, the vehicle may be any air, space, land, or water-based personal equipment or vehicle; any air, space, land, or water-based commercial or industrial equipment or vehicle; any air, space, land, or water-based military equipment or vehicle; or the like. By way of another example, the veneer product 100 may be used in as part of a structure or a component configured to be installed within, housed within, or attached to a structure. For instance, the structure may include, but is not limited to, a residential establishment (e.g., a house, an apartment, or the like), a commercial or industrial establishment (e.g., an office building, a storage building, or the like), a military establishment, or the like. Therefore, the description should not be interpreted as a limitation on the scope of the disclosure but merely an illustration.

Although the disclosure has been described with reference to the embodiments illustrated in the attached drawing figures, equivalents may be employed and substitutions made herein without departing from the scope of the claims. Components illustrated and described herein are merely examples of a system/device and components that may be used to implement embodiments of the disclosure and may be replaced with other devices and components without departing from the scope of the claims. Furthermore, any dimensions, degrees, and/or numerical ranges provided herein are to be understood as non-limiting examples unless otherwise specified in the claims.

## Claims

1. A thermal-layered veneer product (100) for aircraft interior components, comprising:
at least one substrate layer (102);
at least one thermally-conductive layer (104) disposed on the at least one substrate layer, the at least one thermally-conductive layer including at least one perforated graphite layer; and
at least one non-fire-retardant coated veneer layer disposed on the at least one thermally-conductive layer, the at least one veneer layer not including a fire-retardant coating,
one or more of the at least one substrate layer (102), the at least one thermally-conductive layer (104), or the at least one veneer layer being compliant with a FAR 25.853 burn test.

2. The veneer product of Claim 1, each of the at least one substrate layer (102), the at least one thermally-conductive layer (104), and the at least one veneer layer being compliant with the FAR 25.853 burn test.

3. The veneer product of Claim 1 or 2, the at least one substrate layer (102) being two-ply and fabricated from a solid material.

4. The veneer product of any preceding Claim, the at least one substrate layer (102) being fabricated from natural lumber.

5. The veneer product of any preceding Claim, the at least one substrate layer (102) including at least one of a fire-retardant material or a fire-retardant coating.

6. The veneer product of any preceding Claim, the at least one perforated graphite layer including at least one of a non-expandable graphite or a non-intumescent graphite.

7. The veneer product of any preceding Claim, comprising:
at least one adhesive layer positioned between the at least one substrate layer and the at least one thermally-conductive layer.

8. The veneer product of Claim 7, the at least one adhesive layer positioned between the at least one substrate layer and the at least one thermally-conductive layer and the at least one veneer layer being fire-retardant.

9. The veneer product of Claim 7, the at least one adhesive layer positioned between the at least one substrate layer and the at least one thermally-conductive layer and the at least one veneer layer being configured to penetrate the at least one perforated graphite layer.

10. The veneer product of any preceding Claim, the at least one veneer layer being cut from natural lumber.

11. The veneer product of any preceding Claim, the at least one veneer layer being a composite veneer layer fabricated from a mixture including raw wood product and a binder.

12. The veneer product of any preceding Claim, comprising:
at least one adhesive layer positioned between the at least one thermally-conductive layer and the at least one veneer layer.

13. The veneer product of Claim 12, the at least one adhesive layer positioned between the at least one thermally-conductive layer and the at least one veneer layer being fire-retardant.

14. The veneer product of Claim 13, the at least one adhesive layer positioned between the at least one thermally-conductive layer and the at least one veneer layer being configured to penetrate the at least one perforated graphite layer.

15. An aircraft, comprising:
at least one aircraft interior component, the at least one aircraft interior component including a thermal-layered veneer product as claimed in any preceding claim.
